(19) **Europäisches Patentamt**
**European Patent Office**
**Office européen des brevets**

(11) **EP 3 751 853 A1**

(12) **EUROPEAN PATENT APPLICATION**

(43) Date of publication:
**16.12.2020 Bulletin 2020/51**

(51) Int Cl.:
**H04N 19/46** (2014.01)　　　**H04N 19/463** (2014.01)
**H04N 19/51** (2014.01)

(21) Application number: **19305745.2**

(22) Date of filing: **12.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
• **CHEN, Ya**
**35576 CESSON-SEVIGNE (FR)**
• **BORDES, Philippe**
**35576 CESSON-SEVIGNE (FR)**
• **URBAN, Fabrice**
**35576 CESSON-SEVIGNE (FR)**

(74) Representative: **Huchet, Anne**
**InterDigital CE Patent Holdings**
**20, rue Rouget de Lisle**
**92130 Issy-les-Moulineaux (FR)**

(54) **METHOD AND APPARATUS FOR ENCODING A BLOCK AND DECODING BASED ON ILLUMINATION COMPENSATION**

(57)　　Methods (800, 1600, 1700) and apparatuses (1800) for video coding and decoding are provided. The method (800, 1600, 1700) includes deriving one or more illumination compensation parameters based on neighboring samples of a sub-block of a block and neighboring samples of a motion-compensated reference sub-block; deriving a prediction sub-block by applying on the motion-compensated reference sub-block an illumination compensation using the one or more derived illumination compensation parameters. A computer-readable storage medium and a computer program product are also described.

_800_

Fig. 8

**Description**

TECHNICAL FIELD

The present embodiments generally relate to video encoding and decoding using illumination compensation.

BACKGROUND

The present section is intended to introduce the reader to various aspects of art, which may be related to various aspects of at least one of the present embodiments that is described and/or claimed below. This discussion is believed to be helpful in providing the reader with background information to facilitate a better understanding of the various aspects of at least one embodiment. Accordingly, it should be understood that these statements are to be read in this light.

To achieve high compression efficiency, video coding schemes usually employ prediction and transform to leverage spatial and temporal redundancy in the video content. Generally, intra or inter prediction is used to exploit the intra or inter frame correlation. Then the differences between an original picture of the video and a predicted picture, often denoted as prediction errors or prediction residuals, are transformed, quantized and entropy coded. To reconstruct the picture, the compressed data is decoded by inverse processes corresponding to the prediction, transform, quantization and entropy coding.

SUMMARY

The present section provides a simplified summary of at least one of the present embodiments in order to provide a basic understanding of some aspects of the present disclosure. This summary is not an extensive overview of an embodiment. It is not intended to identify key or critical elements of an embodiment. The following summary merely presents some aspects of at least one of the present embodiments in a simplified form as a prelude to the more detailed description provided elsewhere in the document.

According to a general aspect of at least one of the present embodiments, there is provided a method for encoding a block of a video comprising: deriving one or more illumination compensation parameters based on neighboring samples of a sub-block of the block and neighboring samples of a motion-compensated reference sub-block; deriving a prediction sub-block by applying on the motion-compensated reference sub-block an illumination compensation using the one or more derived illumination compensation parameters; and encoding the sub-block using the prediction sub-block.

According to another general aspect of at least one of the present embodiments, there is provided a method for decoding a block of a video comprising: deriving one or more illumination compensation parameters based on neighboring samples of a sub-block of the block and neighboring samples of a motion-compensated reference sub-block; deriving a prediction sub-block by applying on the motion-compensated reference sub-block an illumination compensation using the one or more derived illumination compensation parameters; and decoding the sub-block using the prediction sub-block.

According to another general aspect of at least one of the present embodiments, there is provided an apparatus for encoding a block of a video comprising means for: deriving one or more illumination compensation parameters based on neighboring samples of a sub-block of the block and neighboring samples of a motion-compensated reference sub-block; deriving a prediction sub-block by applying on the motion-compensated reference sub-block an illumination compensation using the one or more derived illumination compensation parameters; and encoding the sub-block using the prediction sub-block.

According to another general aspect of at least one of the present embodiments, there is provided an apparatus for decoding a block of a video comprising means for: deriving one or more illumination compensation parameters based on neighboring samples of a sub-block of the block and neighboring samples of a motion-compensated reference sub-block; deriving a prediction sub-block by applying on the motion-compensated reference sub-block an illumination compensation using the one or more derived illumination compensation parameters; and decoding the sub-block using the prediction sub-block.

According to an embodiment, multiple sub-blocks of a same block being encoded using prediction sub-blocks, encoding or decoding the sub-blocks comprises applying one separate transform to each residual derived from a sub-block and the associated prediction sub-block.

According to an embodiment, the neighboring samples of the current sub-blocks are samples inside the block.

According to an embodiment, encoding or decoding the sub-blocks comprises applying one single transform to a prediction residual derived from the prediction residuals derived from the sub-blocks and the prediction sub-blocks.

According to an embodiment, one or more neighboring sample of the current sub-blocks are samples outside the block.

According to an embodiment, the neighboring samples of the sub-blocks and prediction sub-blocks are formed with samples of at least one further prediction sub-block only.

According to an embodiment, the neighboring samples of a sub-block and prediction sub-block are formed with samples outside the block and samples of at least one further prediction sub-block inside the block.

According to an embodiment, one or more illumination compensation parameters are derived from neighboring samples inside a sub-set of sub-blocks of the block.

According to other general aspects of at least one of the present embodiments, there are provided a non-transitory computer readable storage medium and a computer program product.

The specific nature of at least one of the present embodiments as well as other objects, advantages, features and uses of said at least one of the present embodiments will become evident from the following description of examples taken in conjunction with the accompanying drawings.

BRIEF DESCRIPTION OF THE DRAWINGS

In the drawings, examples of several embodiments are illustrated. The drawings show:

Figure 1 illustrates an L-shaped set of reconstructed neighboring samples for a current block in a current picture, for a reference 0 block in a reference 0 picture and for a reference 1 block in a reference 1 picture in accordance with the prior art;

Figures 2 and 3 illustrates some inconvenient of the illumination compensation approach in accordance with the prior art;

Figure 4 illustrates a simplified block diagram of an exemplary encoder in accordance with an embodiment;

Figure 5 illustrates a simplified block diagram 500 of some modules of an exemplary encoder in accordance with at least one embodiment;

Figure 6 illustrates a simplified block diagram of an exemplary decoder 600 in accordance with at least one embodiment;

Figure 7 illustrates a simplified block diagram 700 of some modules of an exemplary decoder in accordance with at least one embodiment;

Figure 8 illustrates a flowchart 800 of a method of encoding/decoding a block based on illumination compensation in accordance with at least one embodiment;

Figure 9 illustrates examples of sub-partitioning a block in accordance with at least one embodiment;

Figure 10 illustrates a flowchart of a method 1000 of deriving a motion-compensated reference sub-block of a block in accordance with at least one embodiment;

Figure 11 illustrates examples of motion vector of sub-block based on an affine motion model in accordance with at least one embodiment;

Figure 12 illustrates a flowchart of a method 1200 of deriving one or more IC parameters and adjusting a motion-compensated reference sub-block in accordance with the present embodiments;

Figure 13a-d illustrate L-shaped set definitions according to different sub-partitioning of a block in accordance with at least one embodiment;

Figure 14 illustrates a flowchart of a method 1400 of encoding sub-blocks of a block from prediction sub-blocks in accordance with at least one embodiment;

Figure 15 illustrates the case where 4 VPDU are created for grouping the sub-blocks of a block;

Figure 16 illustrates a flowchart of an exemplary method of video encoding in accordance with the present embodiments;

Figure 17 illustrates a flowchart of an exemplary method of video decoding in accordance with the present embodiments; and

Figure 18 illustrates a block diagram of a computing environment within which aspects of the present disclosure can be implemented and executed.

DETAILED DESCRIPTION

The present detailed description illustrates the principles of the present embodiments. It will thus be appreciated that those skilled in the art will be able to devise various arrangements that, although not explicitly described or shown herein, embody the principles of the present embodiments and are included within its scope.

All examples and conditional language recited herein are intended for educational purposes to aid the reader in understanding the principles of the present embodiments and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, that is, any elements developed that perform the same function, regardless of structure.

Thus, for example, it will be appreciated by those skilled in the art that the block diagrams presented herein represent conceptual views of illustrative circuitry embodying the principles of the present embodiments. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The present embodiments are described more fully hereinafter with reference to the accompanying figures, in which examples of said present embodiments are shown. An embodiment may, however, be embodied in many alternate forms and should not be construed as limited to the examples set forth herein. Accordingly, it should be understood that there is no intent to limit embodiments to the particular forms disclosed. On the contrary, the present embodiments are intended to cover all modifications, equivalents, and alternatives falling within the spirit and scope of this application.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

Similar or same elements of figures are referenced with the same reference numbers.

Some figures may represent syntax tables widely used in specification of video compression standards for defining the structure of a bitstream that conforms with said video compression standards. In those syntax tables, the term '...' denotes unchanged portions of the syntax with respect to a well-known definition given in a specification of a video compression standard and removed in the figures to facilitate reading. Bold terms in syntax tables indicate that a value for this term is obtained by parsing a bitstream. The right column of syntax tables indicates the number of bits for encoding a data of a syntax element. For example, u(4) indicates that 4 bits are used for encoding a data, u(8) indicates 8 bits, ae(v) indicates a context adaptive arithmetic entropy coded syntax element.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present embodiments as defined by such claims reside in the fact that the functionalities provided by the various recited means are combined and brought together in the manner which the claims call for. It is thus regarded that any means that can provide those functionalities are equivalent to those shown herein.

It is to be understood that the figures and descriptions have been simplified to illustrate elements that are relevant for a clear understanding of the present embodiments, while eliminating, for purposes of clarity, many other elements found in typical encoding and/or decoding devices.

It will be understood that, although the terms first and second may be used herein to describe various elements, these elements should not be limited by these terms. These terms are only used to distinguish one element from another. Various methods are described above, and each of the methods comprises one or more steps or actions for achieving the described method. Unless a specific order of steps or actions is required for proper operation of the method, the order and/or use of specific steps and/or actions may be modified or combined.

In the following sections, the word "reconstructed" and "decoded" may be used interchangeably. Usually but not necessarily "reconstructed" is used on the encoder side while "decoded" is used on the decoder side. Also, the words "coded" and "encoded" may be used interchangeably. Moreover, the words "image", "picture" and "frame" may be used interchangeably. Furthermore, the words "coding", "source coding" and "compression" may be used interchangeably.

It is to be understood that a picture (also denoted image or frame) may be an array of luma samples in monochrome format, or an array of luma samples and two corresponding arrays of chroma samples in 4:2:0, 4:2:2, or 4:4:4 color format or three arrays of three color components (for example RGB).

In video compression standard, a picture is partitioned into blocks, possibly of different size and/or different shape. It is to be understood that a block is a two-dimensional array or matrix. The horizontal or x direction (or axis) represents a width and the vertical or y direction (or axis) represents a height. The indexes start at 0. The x direction represents columns and the y direction represents rows. The maximum x index is the width - 1. The maximum y index is the height - 1.

The present embodiments are directed to block-based Illumination Compensation (IC) used in inter-prediction mode to adjust block prediction samples obtained via Motion Compensation (MC) by considering any spatial or temporal local illumination variation.

In prior art, IC parameters are estimated by comparing an L-shaped set of reconstructed neighboring samples for a current block in a current picture with the corresponding L-shaped set of reconstructed neighboring samples for a reference block in a reference picture. In the case of bi-prediction (that is two reference blocks per current block), the corresponding L-shaped set of reconstructed neighboring samples for two reference-i blocks (i = 0 or 1) are separately compared to the L-shaped set of reconstructed neighboring samples for the current block.

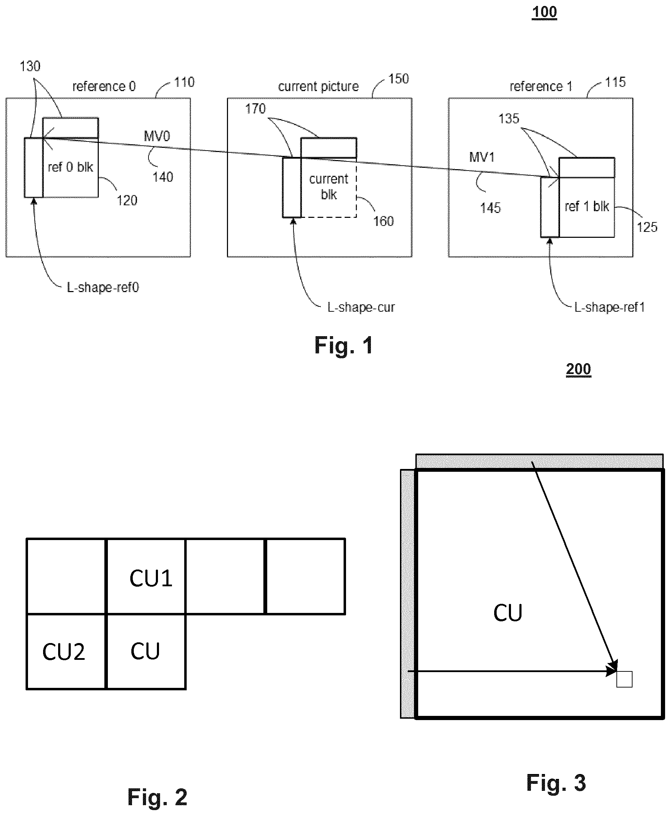

**Figure 1** illustrates a L-shaped set 170 of neighboring samples for a current block 160 in a current picture 150, a corresponding L-shaped set (L-shape-ref-0) 130 for a motion-compensated reference 0 block (ref-0, also herein called MC-0 or motion-compensated 0 block) 120 in a reference 0 picture 110 and a corresponding L-shaped set (L-shape-ref-1) 135 for a motion-compensated reference 1 block (ref-1, also herein called MC-1 or motion compensated 1 block) 125 in a reference 1 picture 115 in accordance with the prior art. Therefore, the term reference i block or ref-i (i=0,1) in the following corresponds to a motion-compensated reference block, that is, the block situated at position ($x + MV_{ix}, y + MV_{iy}$) in the reference picture 'i', where ($x$, y) is the position of the current block in the current picture, where MV stands for motion vector. In **Figure 1**, the motion vector between the current block 160 and the reference 0 block 120 is identified as MV0 140 and the motion vector between the current block 160 and the reference 1 block 125 is identified as MV1 145.

A block-based Illumination Compensation (IC) may use an Illumination Compensation (IC) model which is typically linear and defined by:

$$\mathrm{IC}(x) = a * x + b \quad (1)$$

where a and b are IC parameters, generally called slope and intercept of a linear function, respectively.

In particular the IC parameters may be estimated for example by minimizing the difference between the samples in the L-shaped set 170 for the current block and the samples in the L-shaped set (130 or 135) for the reference block (120 or 125) adjusted (corrected) with an illumination compensation using the IC model. The difference between the samples may be minimized under the least squares method as follows:

$$(a_i, b_i) = \underset{(a,b)}{\mathrm{argmin}} \left( \sum_{\substack{x \in L-shape-cur, \\ y \in L-shape-ref}} (x - a * y - b)^2 \right) \quad (2)$$

where ($a_i, b_i$) are the optimum IC parameters associated with reference block, argmin(.) is the argument of the minimum and the summation is over each sample x in the L-shaped set *L-shape-cur* of samples in the current picture paired with its corresponding sample y in the L-shaped set *L-shape-ref* of samples in the reference picture.

According to the prior art, the idea of utilizing the L-shaped sets of neighboring samples relies on the assumption that the IC parameters, which are optimized for neighboring samples of a current block, remain suited for the current block. The assumption is true in general since the neighboring samples of the L-shaped set are the closest available samples to the current block samples. However, this approach introduces a pipeline dependency for inter-prediction since one must wait for the neighboring blocks being reconstructed before building the current prediction block as illustrated in **Figure 2** where the decoding of the current block CU depends on the neighboring reconstructed samples of the neighboring blocks CU1 and CU2. Moreover, the IC parameters are estimated with samples that may be relatively far from the samples to be adjusted as illustrated in **Figure 3**.

The present embodiments address some disadvantages present in the prior art. In particular, the present embodiments derive one or more illumination compensation parameters based on neighboring samples of a sub-block of the current block and neighboring samples of a motion-compensated reference sub-block, derive a prediction sub-block by applying on the motion-compensated reference sub-block an illumination compensation using the one or more derived illumination compensation parameters, and encode the sub-block using the prediction sub-block as will be further described in the following paragraphs and figures.

Encoding

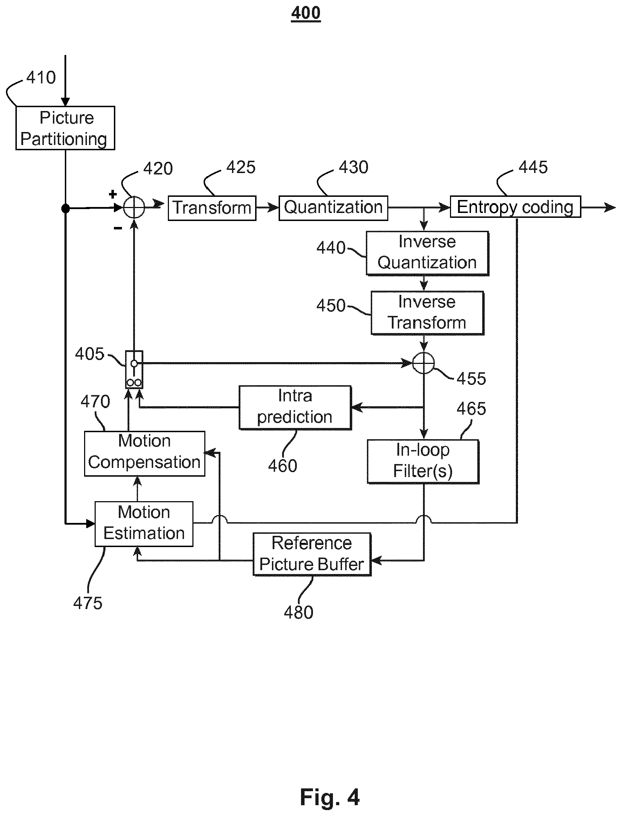

**Figure 4** illustrates a simplified block diagram of exemplary encoder 500 in accordance with at least one embodiment.

The encoder 400 may be included in a transmitter or headend in a communication system.

To encode a video sequence with one or more pictures, a picture is partitioned into blocks of possibly different size and/or different shape (module 410). For example, in HEVC ("*ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265"*), a picture may be partitioned into CTUs (Coding Tree Units) of square shape with a configurable size. A consecutive set of CTUs may be grouped into a slice. A CTU is the root of a quad-tree partitioning into blocks, usually denoted CUs (Coding Units).

In the exemplary encoder 500, a picture is encoded by the block-based video encoder modules as described below.

Each block is encoded using either an intra-prediction mode or inter-prediction mode.

When a block is encoded in an intra-prediction mode (module 460), the encoder 400 performs intra-prediction (also denoted spatial prediction), based on at least one block in the same picture. As an example, a prediction block is obtained by intra-predicting a block from reconstructed neighboring samples.

When a block is encoded in an inter-prediction mode, the encoder 400 performs inter-prediction (also denoted temporal prediction), based on at least one reference block of at least one reference picture.

Inter-prediction coding is performed by performing motion-estimation (module 475) and motion-compensating (in module 470) a reference block stored in a reference picture buffer 480.

In uni-inter-prediction mode, the prediction block may be generally (but not necessarily) based on an earlier reference picture.

In bi-inter-prediction mode, the prediction block may be generally (but not necessarily) based on an earlier and a later picture.

The encoder decides (module 405) which one of the intra-prediction mode or inter-prediction mode to use for encoding the block and indicates the intra/inter decision by a prediction mode syntax element.

A prediction residual block is calculated by subtracting (module 420) the prediction block (also known as a predictor) from the block.

The prediction residual block is transformed (module 425) and quantized (module 430). The transform module 425 may transform the block from the pixel (spatial) domain to the transform (frequency) domain. The transform may be, for example, a cosine transform, a sine transform, a wavelet transform, etc. Quantization (module 430) may be performed according to, for example, a rate distortion criterion.

The quantized transform coefficients, as well as motion vectors and other syntax elements, are entropy coded (module 445) to output a bitstream. The entropy coding may be, for example, Context Adaptive Binary Arithmetic Coding (CABAC), Context Adaptive Variable Length Coding (CAVLC), Huffman, arithmetic, exp-Golomb, etc.

The encoder may also skip the transform and apply quantization directly to the non-transformed prediction residual block. The encoder may also bypass both transform and quantization, that is the prediction residual block is coded directly without the application of the transform or quantization process.

In direct PCM coding, no prediction is applied and the block samples are directly coded into the bitstream.

The encoder 400 comprises a decoding loop and thus decodes an encoded block to provide a reference for further predictions. The quantized transform coefficients are de-quantized (module 440) and inverse transformed (module 450) to decode a prediction residual block. A block is reconstructed by combining (module 455) the decoded prediction residual block and the prediction block. An in-loop filter (465) may be applied to the reconstructed picture, for example, to perform deblocking/Sample Adaptive Offset (SAO) filtering to reduce coding artifacts. The filtered picture is stored in the reference picture buffer 480.

The modules of encoder 400 may be implemented in software and executed by a processor or may be implemented using circuit components well-known by one skilled in the art of compression. In particular, video encoder 400 may be implemented as an integrated circuit (IC).

The modules of encoder 400 are present in legacy block-based video encoders (for example HEVC encoders), except for the differences described in the present embodiments, particularly, differences in modules motion-compensation 470 and/or motion-estimation 475 based on illumination compensation, as will be described in greater detail in the following paragraphs and figures.

For functionalities other than illumination compensation (for example, modules other than 470 and 475), the encoder 400 may be similar to any legacy block-based video encoder and the functionalities are not herein described in detail.

The motion estimation module 475 may include motion-compensation since its purpose is to determine the best motion vectors which may use an iterative search that typically terminates when the rate-distortion cost (RD cost) is low enough or has reached a minimum. As a result, IC may also be applied in the motion estimation module 475.

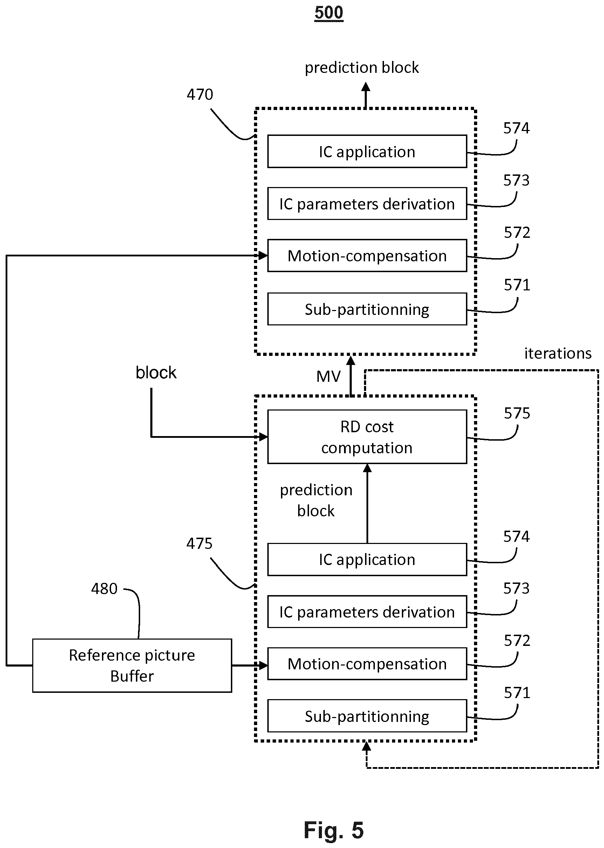

**Figure 5** illustrates a simplified block diagram 500 of some modules of an exemplary encoder in accordance with at least one embodiment.

The modules motion-estimation 475 and motion-compensation 470 specify the IC related functionalities within the modules for an encoder in accordance with at least one embodiment.

The modules motion-estimation 475 and motion-compensation 470 may include a sub-partitioning module 571 which splits a block into sub-blocks in accordance with the present embodiments.

Sub-partitioning the block makes the IC parameters spatially adapted to the local features and reduces the maximal distance of the samples used for estimating IC parameters to any of the adjusted samples compared to the regular method as will be further described in the following paragraphs and figures.

The modules motion-estimation 475 and motion-compensation 470 may also include an internal motion-compensation module 572 which perform a motion-compensated reference sub-block in accordance with the present embodiments.

The modules motion-estimation 475 and motion-compensation 470 may also include an IC parameter derivation module 573 which derives IC parameters for the motion-compensated reference sub-blocks in accordance with the present embodiments.

Finally, the modules motion-estimation 475 and motion-compensation 470 may include an IC application module 574 which derives prediction sub-blocks from the motion-compensated reference sub-blocks and derived IC parameters in accordance with the present embodiments.

The motion-estimation module 475 may include motion-compensation since its purpose is to determine the best motion vectors which may use an iterative search that typically terminates when the rate-distortion cost (RD cost) is low enough or has reached a minimum. The iteration tests different motion vector candidates. The module motion-estimation 475 may then include an RD cost computation module 575 that determines the RD cost and establishes whether a suitable value or a minimum value of RD has been achieved in order to provide the best motion vector MV to the motion compensation module 570.

In one embodiment, the motion-estimation module 575 may also output the IC parameters associated with the best motion vector MV. In that case, IC parameters do not need to be re-calculated in the module 570 and the module 573 can be skipped from motion-compensation module 570.

The modules in **Figure 5** based on illumination compensation will be described in greater detail in the following paragraphs and figures.

In one embodiment, IC may be enabled or disabled adaptively for each inter-prediction coded block. In the bitstream, when IC is enabled for a block, picture, slide or sequence, an IC flag may be encoded per block to indicate whether IC is enabled for the block or not. The IC flag may then be retrieved at the decoder. In another embodiment, the IC flag may be inferred from other coded parameters (for example merge index, block size).

In one embodiment, when the derived IC parameters do not result in improvement of the prediction, then IC may be locally or globally deactivated (for example the IC flag being set to false).

In one embodiment, when the IC flag enables IC (for example the IC flag is set to true) for a block, the IC parameters for the block may be included and optionally encoded in the bitstream, to be retrieved at the decoder.

Decoding

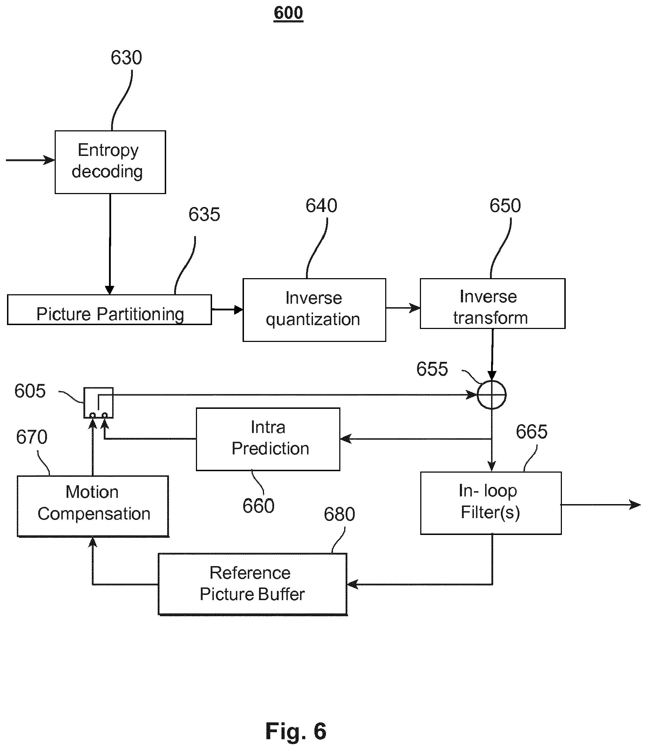

**Figure 6** illustrates a simplified block diagram of an exemplary decoder 600 in accordance with at least one embodiment.

The decoder 600 may be included in a receiver in a communication system.

The decoder 600 generally performs a decoding pass reciprocal to the encoding pass performed by the encoder 400 as described in **Figures 4** and **5,** although not all operations in the decoder are inverse operations of the encoding process (for example intra- and inter-prediction).

In particular the input of the decoder 600 includes a bitstream, which may be generated by the encoder 400.

The bitstream is first entropy decoded (module 630) to obtain transform coefficients, motion vectors MV, picture partitioning information, possibly prediction mode information, other syntax elements and/or coded information.

For example, in HEVC, the picture partitioning information indicates the size of the CTUs, and a manner a CTU is split into CUs. The decoder may therefore divide (635) the picture into CTUs, and each CTU into CUs, according to the picture partitioning information.

Transform coefficients are de-quantized (module 640) and inverse transformed (module 650) to decode a prediction residual block. The decoded prediction residual block is then combined (module 655) with a prediction block (also known as a predictor) to obtain a decoded/reconstructed block.

The prediction block may be obtained (module 605) from intra-prediction (module 660) or motion-compensated prediction (that is, inter-prediction) (module 670) depending, possibly, on prediction mode information. An in-loop filter (module 665) may be applied to the reconstructed picture. The in-loop filter may comprise a deblocking filter and/or a SAO filter. The filtered picture is stored in a reference picture buffer 680.

The modules of decoder 600 may be implemented in software and executed by a processor, or may be implemented using circuit components well-known by one skilled in the art of compression. In particular, decoder 600 may be implemented as an integrated circuit (IC), alone or combined with encoder 400 as a codec.

The modules of decoder 600 are present in legacy block-based video decoders (for example, HEVC decoders), except for the differences described in the present embodiments, particularly, differences in motion-compensation module 670 based on illumination compensation, as will be described in greater detail in the following paragraphs and figures.

For functionalities other than illumination compensation (for example modules other than 670), decoder 600 may be similar to any legacy block-based video decoder and the functionalities are not herein described in detail.

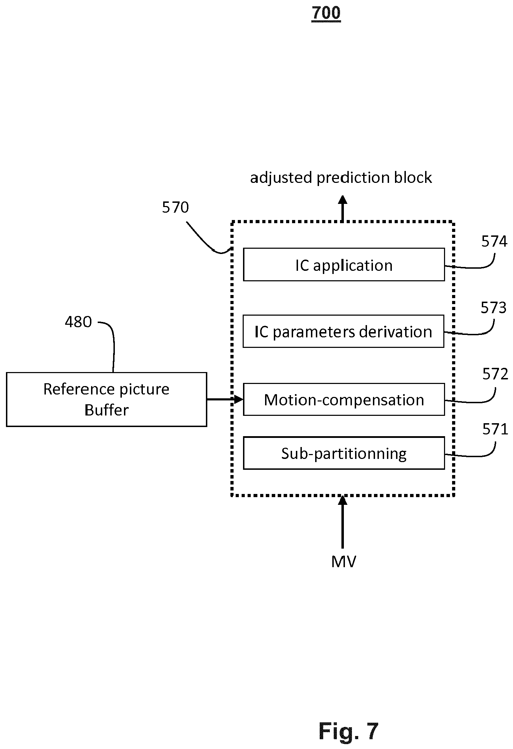

**Figure 7** illustrates a simplified block diagram 700 of some modules of an exemplary decoder in accordance with at least one embodiment.

Module 570 illustrates the IC related functionalities within the module for a decoder in accordance with the present embodiments.

Motion compensation 570 may include the sub-partitioning module 571, the internal motion-compensation module 572, the IC parameter derivation module 573 and the IC application module 574.

The modules in **Figure 7** based on illumination compensation will be described in greater detail in the following paragraphs and figures.

In one embodiment, IC may be enabled or disabled adaptively for each inter-prediction coded block.

From the bitstream, when IC is enabled for a current slice/picture or sequence, an IC flag may be decoded per block to indicate whether IC is enabled for the block or not.

Alternately, the IC flag may be inferred, for example it may be derived from previously decoded blocks using a merge mode. The IC flag is then retrieved at the video decoder.

In cases where the derived IC parameters do not result in improvement of the prediction, then IC may be locally or globally deactivated (for example the IC flag being set to false). When the IC flag enables IC (for example the IC flag is set to true) for a block, the IC parameters for the block may be included and optionally decoded from the bitstream, to be retrieved at the decoder.

It is to be understood that when the IC flag and IC parameters are included and optionally decoded from the bitstream, the module 570 retrieves the IC flags and IC parameters from the bitstream instead of calculating or deriving the IC parameters.

In the following, embodiments are described for derivation or computation of the IC parameters in accordance with the embodiments.

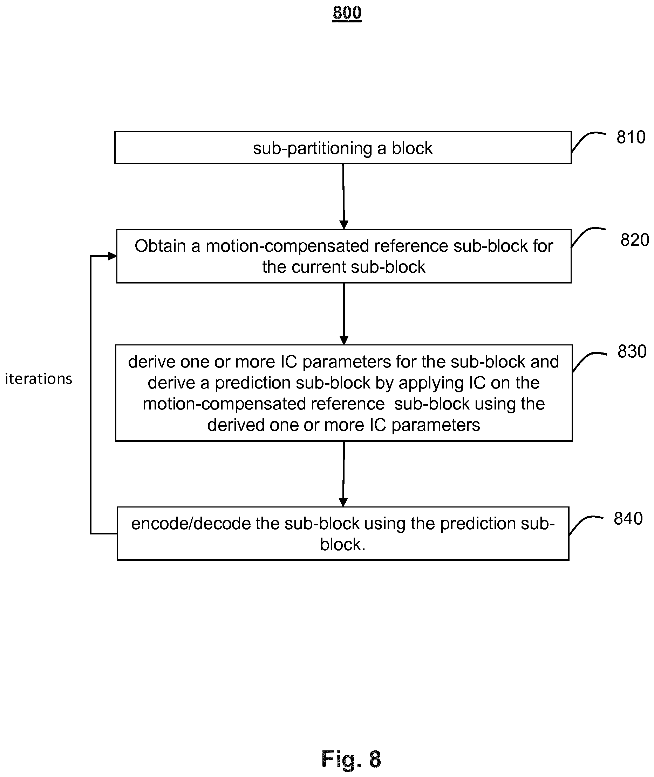

**Figure 8** illustrates a flowchart 800 of a method of encoding/decoding a block based on illumination compensation in accordance with at least one embodiment.

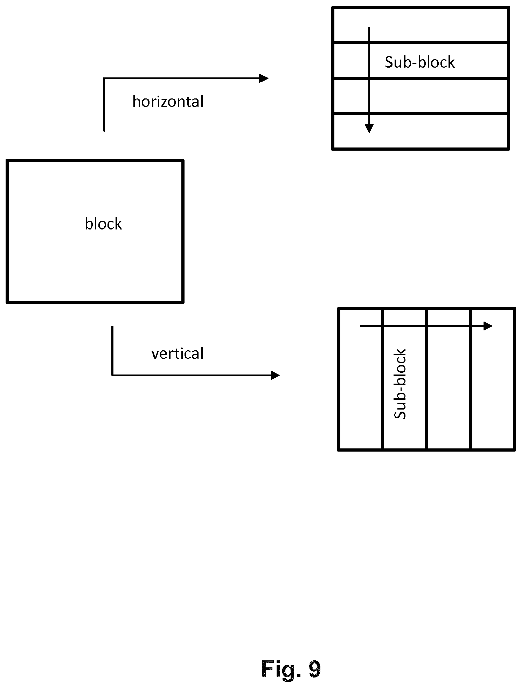

At step 810, the block is sub-partitioned into sub-blocks as illustrated in **Figure 9**. At the decoder, sub-partitioning may be triggered by picture partitioning information decoded from a bitstream.

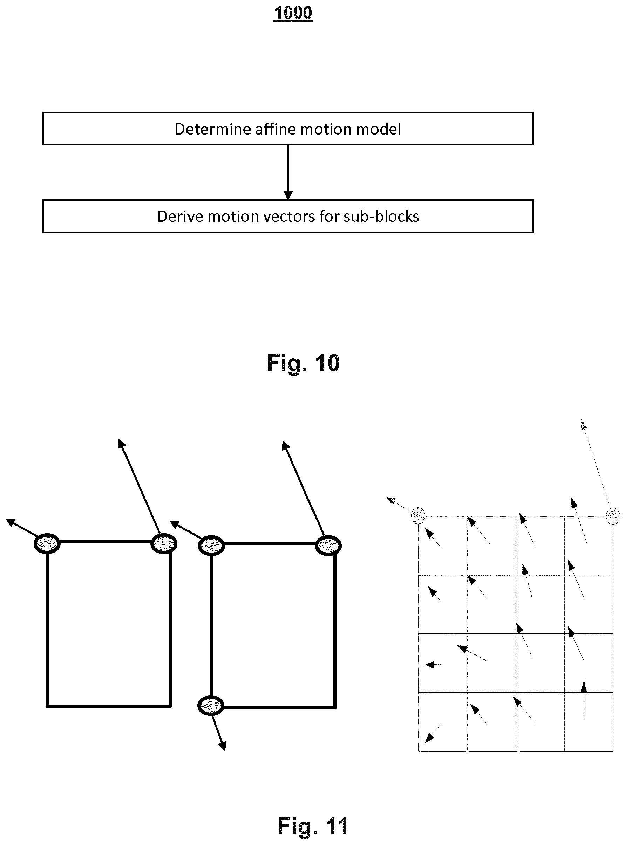

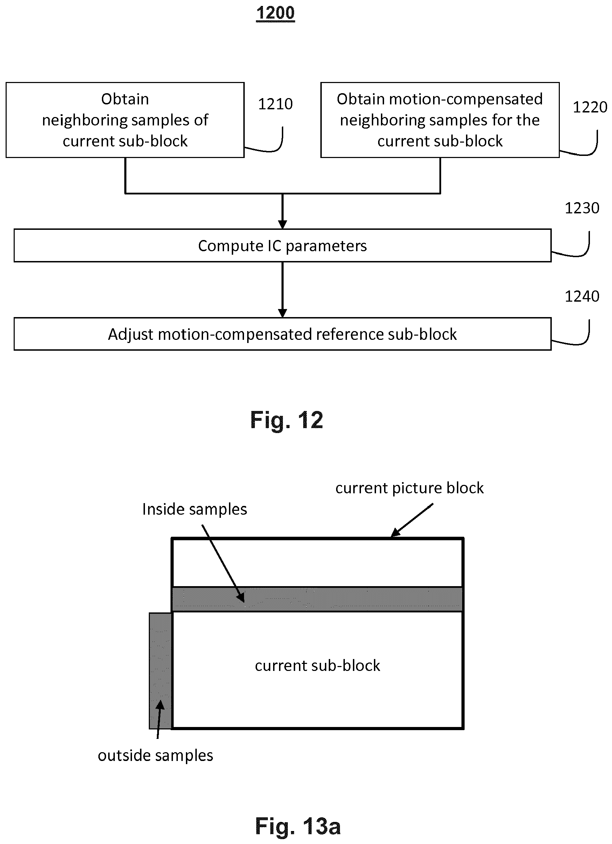

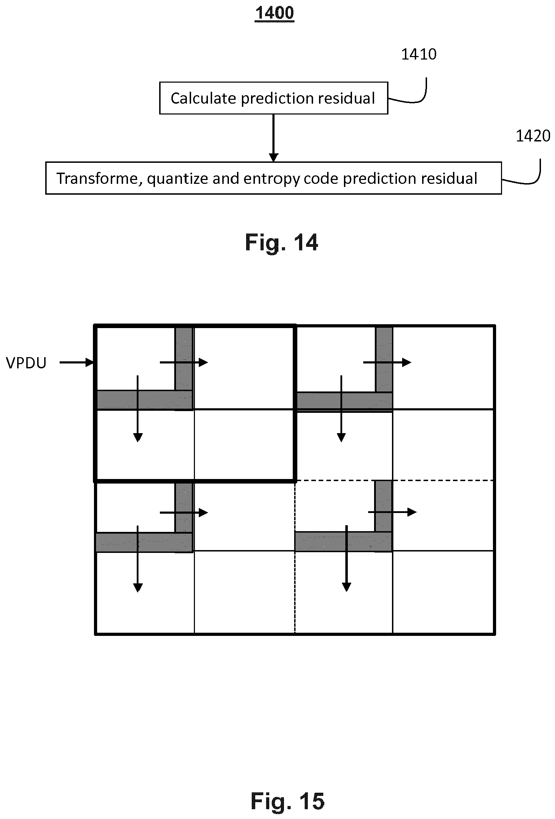

Next, a motion-compensated reference sub-block is obtained from motion-compensation (step 820) as explained in detail in **Figures 10** and **11**, IC parameters are derived from neighboring samples of the motion-compensated reference sub-block and neighboring samples of a sub-block (step 830) and a prediction sub-block is derived by applying on the motion-compensated reference sub-block an illumination compensation using the IC parameters as explained in detail in **Figures 12** and **13a-d**. Finally, the sub-block is encoded/decoded using the prediction sub-block (step 840) as explained in detail in **Figure 14**. The method iterates for each sub-block of the block.

Steps 810-840 may be performed, for example, by encoder 400 or 500 or decoder 600 or 700.

In particular, step 810-830 may be performed by, for example, modules 470, 475 and 471 for the encoder or modules 670 for the decoder.

**Figure 9** illustrates examples of sub-partitioning a block (step 810) in accordance with at least one embodiment.

In one embodiment, the block may be horizontally or vertically split into at least two sub-blocks.

For example, when the block is horizontally (or vertically) split, the coding and decoding of the sub-blocks is applied repeatedly downwards (horizontal split) or rightwards (vertical split) as illustrated by arrows in **Figure 9**.

The sub-block sizes (heights and/or widths) may be equal or not.

For example, the sub-block width (or height) may be equal to half of the block width (or height) or 1/4 of the block width (or height), resulting in 2:2 split or 1:3/3:1 split. The 2:2 split is like a Binary Tree (BT) split while the 1:3/3:1 split is like an Asymmetric Binary Tree (ABT) split. For example, minimum block size is 4x8 (or 8x4). If block size is greater than 4x8 (or 8x4) then the corresponding block is divided by 4 sub-blocks.

In one embodiment, the number of sub-blocks may depend on the block size. For example, if one side of a block is 8, the 1:3/3:1 split along this side is not allowed. For example, an expected minimum block size is 4x8 (or 8x4). If block size is greater than 4x8 (or 8x4) then the block is divided by 4 sub-blocks.

In one embodiment, the sub-partitioning may be signaled in the bitstream by a syntax element. Step 571, at the decoder, then obtains the syntax element and split a block according to the signaled sub-partitioning.

**Figure 10** illustrates a flowchart of a method 1000 of deriving a motion-compensated reference sub-block of a block in accordance with at least one embodiment.

A motion vector is estimated for each sub-block for example, using any well-known block-based motion estimating method.

In a variant, a motion vector for each sub-block is derived from an estimated affine motion model that captures a translational motion field of the block. This variant improves temporal prediction.

As shown in **Figure 11** (left), the affine motion model may be defined by a two control point motion vectors (4-parameters) or three control point motion vectors (6-parameters) or any number of control point motion vectors.

For 4-parameter affine motion model, a motion vector at sample location $(x, y)$ in the block may be derived as:

$$\begin{cases} mv_x = \dfrac{mv_{1x} - mv_{0x}}{W}x + \dfrac{mv_{1y} - mv_{0y}}{W}y + mv_{0x} \\ mv_y = \dfrac{mv_{1y} - mv_{0y}}{W}x + \dfrac{mv_{1y} - mv_{0x}}{W}y + mv_{0y} \end{cases}$$

For 6-parameter affine motion model, a motion vector at sample location $(x, y)$ in the block may be derived as:

$$\begin{cases} mv_x = \dfrac{mv_{1x} - mv_{0x}}{W}x + \dfrac{mv_{2x} - mv_{0x}}{H}y + mv_{0x} \\ mv_y = \dfrac{mv_{1y} - mv_{0y}}{W}x + \dfrac{mv_{2y} - mv_{0y}}{H}y + mv_{0y} \end{cases}$$

where $(mv_{0x}, mv_{0y})$ is motion vector of the top-left corner control point, $(mv_{1x}, mv_{1y})$ is motion vector of the top-right corner control point, and $(mv_{2x}, mv_{2y})$ is motion vector of the bottom-left corner control point.

Motion vector at a control point may be estimated using any well-known motion estimation method.

For example, the motion vector of the center sample of each sub-block, calculated according to above equations, and possibly rounded to 1/16 fraction accuracy, is the motion vector of the sub-block, as shown in **Figure 11** (right).

**Figure 12** illustrates a flowchart of a method 1200 of deriving one or more IC parameters and adjusting a motion-compensated reference sub-block in accordance with the present embodiments.

The following illumination Compensation (IC) model may be used for illumination compensating a motion-compensated reference sub-block.

The IC model is defined by:

$$IC(x_{sb}) = a_{sb} * x_{sb} + b_{sb} \quad (3)$$

where $a_{sb}$ and $b_{sb}$ are IC parameters for the motion-compensated reference sub-block sb, generally called slope or scale and intercept or offset of a linear function, respectively.

In one embodiment, the neighboring samples of a sub-block may be a L-shaped set of neighboring samples as illustrated in **Figure 13a-d**. In a variant, not all the neighboring samples of the L-shaped set are used, but only part of them (for example intra mode reconstructed samples are not used).

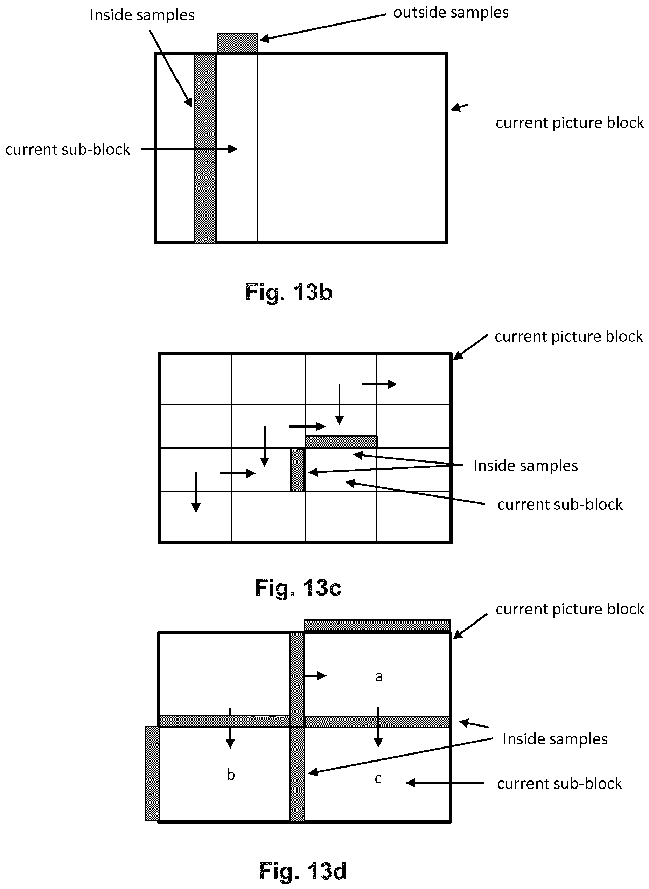

A L-shaped set is defined as a set of causal neighboring samples of a sub-block, that is neighboring samples that are available for reconstructing the current sub-block. Thus, some samples of a L-shaped may be inside or outside the block as illustrated in **Figure 13a** (horizontal split) and in **Figure 13b** (vertical split).

**Figure 13c** and **13d** illustrate other L-shaped set definitions according to different sub-partitioning of the block. The arrows indicate a scanning order and neighboring sub-blocks to encode the sub-blocks of the block.

At step 1210 in **Figure 12**, a set of neighboring samples of the current sub-block is obtained.

At step 1220, a reference sub-block in a reference picture is pointed by the motion vector of the sub-block and neighboring samples of the reference sub-block are the neighboring samples of the motion-compensated reference sub-block.

The IC parameters may be estimated by minimizing the difference between neighboring samples of the current sub-block and neighboring samples of the motion-compensated reference sub-block once these neighboring samples are adjusted with the IC parameters $a_{sb}$ and $b_{sb}$.

At step 1230, the difference between the neighboring samples may be minimized under the least squares method as follows:

$$(a_{sb}, b_{sb}) = \underset{(a,b)}{\operatorname{argmin}} \left( \sum_{\substack{x \in L-shape-cur, \\ y \in L-shape-ref-i}} (x - a * y - b)^2 \right) \quad (4)$$

where i is the reference index, 0 or 1, $(a_{sb}, b_{sb})$ are the optimum IC parameters, argmin(.) is the argument of the minimum and the summation is over each neighboring sample x, here in a L-shaped set *L-shape-cur,* paired with its corresponding neighboring samples y, here in the L-shaped set *L-shape-ref.*

At step 1240, an adjusted motion-compensated reference sub-block is derived by applying on the motion-compensated reference sub-block the illumination compensation model using the IC parameters $(a_{sb}, b_{sb})$, that is each sample (x,y) of the motion-compensated reference sub-block is adjusted according to equation 3.

**Figure 14** illustrates a flowchart of a method 1400 of encoding sub-blocks of a block from prediction sub-blocks in accordance with at least one embodiment.

At step 1410, a prediction residual sub-block for a sub-block of the block is calculated as the difference between the sub-block and a prediction sub-block.

At step 1420, the prediction residual sub-block is transformed, quantized and entropy coded.

The method iterates for each sub-block of the block.

In one embodiment, the prediction residual sub-block is transformed by using a one separate transform.

In a variant of this embodiment, the neighboring samples of the sub-block and prediction sub-blocks are reconstructed samples, that is encoded and samples of the decoded block. The IC parameters are then derived from reconstructed samples only.

In one embodiment, the neighboring samples of the sub-block and the prediction sub-block is formed with inside samples only. This allows independency of the coding/decoding of the block and thus parallel processing.

For example, in case of **Figure 13c**, the sub-block (a) may use samples on the left only, the sub-block (b) may use samples on the top only and the sub-block (c) may use samples on the left and top.

In an embodiment, a prediction residual block is formed from all the prediction residual sub-blocks and the prediction residual block is transformed using a one single transform, quantized and entropy coded.

In a variant of this embodiment, the neighboring samples of the sub-blocks and prediction subblocks are formed with outside samples only (as illustrated for example in **Figures 13a-d**).

In another variant of this embodiment, the neighboring samples of the sub-blocks and prediction sub-blocks are formed with samples of at least one further prediction sub-block only.

In an embodiment, the neighboring samples of the sub-blocks and prediction sub-blocks are formed with outside samples and samples of at least one further prediction sub-block inside the block.

For example, in case of **Figure 13a**, the samples on the left of the current sub-block and the samples of the adjusted prediction sub-block on top are used.

In another variant, a first sub-block is identified as being the first sub-block to be encoded when the set of sub-blocks is traversed in a scanning order. The IC parameters for this first sub-block be default ones or the first prediction sub-block is not illumination compensated.

In one embodiment, the IC parameters are derived based on a sub-set of sub-blocks in order to reduce the amount of calculation, therefore reducing complexity.

For example, in HEVC, Virtual Pipeline Data Units (VPDU) defines a sub-set of sub-blocks inside a block. Then, IC parameters are derived based on samples inside VPDU only.

**Figure 15** illustrates the case where 4 VPDU are created for grouping the sub-blocks of a block.

In a variant of this embodiment, a first sub-block of VPDU may not use IC parameters or may use default IC parameters. This way, there is no data dependencies between VPDUs, and they can be processed in parallel.

This can also be applied in the case of horizontal or vertical split.

In one embodiment, the IC function may include equations 1 and 3 or other linear or nonlinear functions of the IC parameters. For example, the IC function may only consider the slope parameter without the intercept parameter, i.e. IC(x) = a * x, In one embodiment, the IC parameters may be more than two parameters, depending on the function (e.g., depending on the degree of a polynomial function).

In one embodiment, equations 2, 4 may be based on an absolute difference, instead of a square of difference.

The IC parameters may include at least one parameter, for example, at least one amplitude scale or slope parameter, amplitude shift or intercept parameter, position scale parameter, position shift parameter, temporal scale parameter, temporal shift parameter, etc.

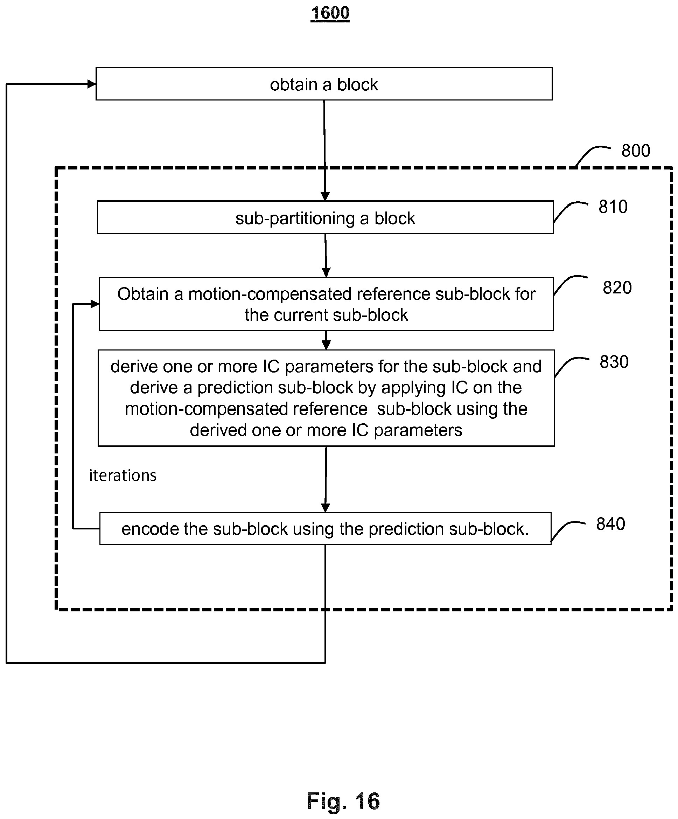

**Figure 16** illustrates a flowchart 1600 of an exemplary method of video encoding in accordance with the present embodiments.

The method 1600 includes obtaining a block in a picture of the video and encodes the block according to the method 800. The method 1600 iterates for encoding all the blocks of a picture.

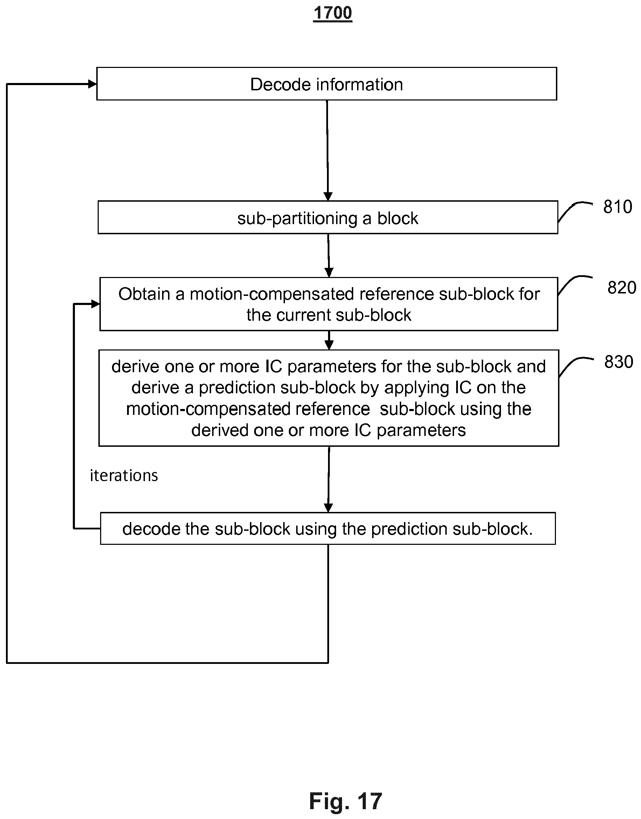

**Figure 17** illustrates a flowchart 1700 of an exemplary method of video decoding in accordance with the present embodiments.

The method 1700 includes decoding information from the bitstream such transform coefficients, motion vectors, picture partitioning information, possibly prediction mode information, other syntax elements and/or other coded information.

In one embodiment, IC prediction flag is decoded to determine whether IC is enabled for a block, picture, slice or sequence.

In one embodiment, when the IC flag enables IC (for example the IC flag is set to true) for a block, the IC parameters for the block may be included and optionally decoded from the bitstream.

Next, the method includes de-quantizing transform coefficients (module 640) and inverse transformed (module 650) to decode a prediction residual block. Next, the method includes sub-partitioning a block and deriving a prediction block. Finally, the method includes combining the decoded prediction residual block with the prediction block to obtain a decoded/reconstructed block.

The prediction block may be obtained (module 605) from intra-prediction (module 660) or motion-compensated prediction (that is, inter-prediction) (module 670) depending, possibly, on prediction mode information. When IC is enabled, the prediction block is derived from steps 810-830 of the method 800.

The IC parameters may include at least one amplitude scale or slope parameter, amplitude shift or intercept parameter, position scale parameter, position shift parameter, temporal scale parameter, temporal shift parameter, etc. The block may be a reconstructed block.

According to one embodiment of the method, the function may be one of a sum of a squared difference and a sum of an absolute difference.

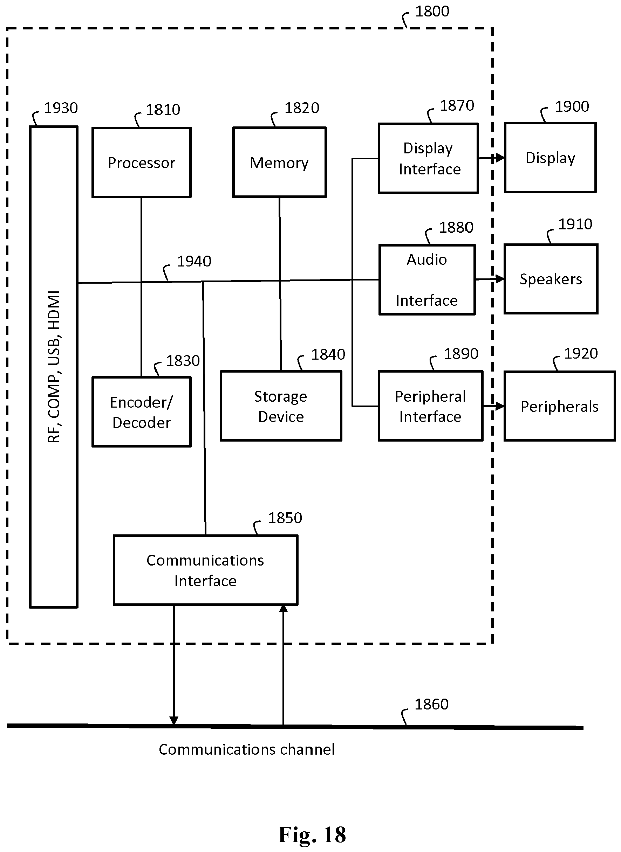

**Figure 18** illustrates a block diagram of an example of a system in which various aspects and embodiments are implemented.

System 1800 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1800, singly or in combination, can be embodied in a single integrated circuit (IC), multiple ICs, and/or discrete components. For example, in at least one embodiment, the processing and encoder/decoder elements of system 1800 are distributed across multiple ICs and/or discrete components. In various embodiments, the system 1800 is communicatively coupled to one or more other systems, or other electronic devices, via, for example, a communications bus 1940 or through dedicated input and/or output ports. In various embodiments, the system 1800 is configured to implement one or more of the aspects described in this document.

The system 1800 includes at least one processor 1810 configured to execute instructions loaded therein for implementing, for example, the various aspects described in this document. Processor 1810 can include embedded memory, input output interface, and various other circuitries as known in the art. The system 1800 includes at least one memory 1820 (e.g., a volatile memory device, and/or a non-volatile memory device). System 1800 includes a storage device 1840, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1840 can include an internal storage device, an attached storage device (including detachable and non-detachable storage devices), and/or a network accessible storage device, as non-limiting examples.

System 1800 includes an encoder/decoder module 1830 configured, for example, to process data to provide an encoded video or decoded video, and the encoder/decoder module 1830 can include its own processor and memory. The encoder/decoder module 1830 represents module(s) that can be included in a device to perform the encoding and/or decoding functions. As is known, a device can include one or both of the encoding and decoding modules. Additionally, encoder/decoder module 1830 can be implemented as a separate element of system 1800 or can be incorporated within processor 1810 as a combination of hardware and software as known to those skilled in the art. Program code to be loaded onto processor 1810 or encoder/decoder 1830 to perform the various aspects described in this document can be stored in storage device 1840 and subsequently loaded onto memory 1820 for execution by processor 1810. In accordance with various embodiments, one or more of processor 1810, memory 1820, storage device 1840, and encoder/decoder module 1830 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1810 and/or the encoder/decoder module 1830 is used to store instructions and to provide working memory for processing that is needed during encoding or decoding. In other embodiments, however, a memory external to the processing device (for example, the processing device can be either the processor 1810 or the encoder/decoder module 1830) is used for one or more of these functions. The external memory can be the memory 1820 and/or the storage device 1840, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1800 can be provided through various input devices as indicated in block 1930. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in **Figure 18**, include composite video.

In various embodiments, the input devices of block 1930 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1800 to other electronic devices across USB and/or HDMI connections. It is to be understood that various aspects of input processing, for example, Reed-Solomon error correction, can be implemented, for example, within a separate input processing IC or within processor 1810 as necessary. Similarly, aspects of USB or HDMI interface processing can be implemented within separate interface ICs or within processor 1810 as necessary. The demodulated, error corrected, and demultiplexed stream is provided to various processing elements, including, for example, processor 1810, and encoder/decoder 1830 operating in combination with the memory and storage elements to process the data stream as necessary for presentation on an output device.

Various elements of system 1800 can be provided within an integrated housing, within the integrated housing, the various elements can be interconnected and transmit data therebetween using suitable connection arrangement, for example, an internal bus 1940 as known in the art, including the Inter-IC (I2C) bus, wiring, and printed circuit boards.

The system 1800 includes communication interface 1850 that enables communication with other devices via communication channel 1060. The communication interface 1850 can include, but is not limited to, a transceiver configured to transmit and to receive data over communication channel 1860. The communication interface 1850 can include, but is not limited to, a modem or network card and the communication channel 1860 can be implemented, for example, within a wired and/or a wireless medium.

Data is streamed, or otherwise provided, to the system 1800, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1860 and the communications interface 1850 which are adapted for Wi-Fi communications. The communications channel 1860 of these embodiments is typically connected to an access point or router that provides access to external networks including the Internet for allowing streaming applications and other over-the-top communications. Other embodiments provide streamed data to the system 1800 using a set-top box that delivers the data over the HDMI connection of the input block 1830. Still other embodiments provide streamed data to the system 1800 using the RF connection of the input block 1830. As indicated above, various embodiments provide data in a non-streaming manner. Additionally, various embodiments use wireless networks other than Wi-Fi, for example a cellular network or a Bluetooth network.

The system 1800 can provide an output signal to various output devices, including a display 1900, speakers 1910, and other peripheral devices 1920. The display 1900 of various embodiments includes one or more of, for example, a touchscreen display, an organic light-emitting diode (OLED) display, a curved display, and/or a foldable display. The display 1900 can be for a television, a tablet, a laptop, a cell phone (mobile phone), or other device. The display 1900 can also be integrated with other components (for example, as in a smart phone), or separate (for example, an external monitor for a laptop). The other peripheral devices 1920 include, in various examples of embodiments, one or more of a stand-alone digital video disc (or digital versatile disc) (DVR, for both terms), a disk player, a stereo system, and/or a lighting system. Various embodiments use one or more peripheral devices 1920 that provide a function based on the output of the system 1800. For example, a disk player performs the function of playing the output of the system 1800.

In various embodiments, control signals are communicated between the system 1800 and the display 1900, speakers 1910, or other peripheral devices 1920 using signaling such as AV.Link, Consumer Electronics Control (CEC), or other communications protocols that enable device-to-device control with or without user intervention. The output devices can be communicatively coupled to system 1800 via dedicated connections through respective interfaces 1870, 1880, and 1890. Alternatively, the output devices can be connected to system 1800 using the communications channel 1860 via the communications interface 1850. The display 1900 and speakers 1910 can be integrated in a single unit with the other components of system 1800 in an electronic device such as, for example, a television. In various embodiments, the display interface 1870 includes a display driver, such as, for example, a timing controller (T Con) chip.

The display 1900 and speaker 1910 can alternatively be separate from one or more of the other components, for example, if the RF portion of input 1930 is part of a separate set-top box. In various embodiments in which the display 1900 and speakers 1910 are external components, the output signal can be provided via dedicated output connections, including, for example, HDMI ports, USB ports, or COMP outputs.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants (PDAs), and other devices that facilitate communication of information between end-users.

According to an aspect of the present embodiments, an apparatus 1800 for video encoding is provided, the apparatus including a processor 1810, and at least one memory 1820, 1840 coupled to the processor, the processor 1810 being configured to perform any of the embodiments of the method 800, 1600 and/or 1700 described above.

According to an aspect of the present disclosure, an apparatus for video encoding is provided including means for deriving one or more illumination compensation parameters based on neighboring samples of a sub-block of a block and neighboring samples of a motion-compensated reference sub-block; means for deriving a prediction sub-block by applying on the motion-compensated reference sub-block an illumination compensation using the one or more derived illumination compensation parameters; and means for encoding the sub-block using the prediction sub-block. The video encoders of **Figures 4**, **5** may include the structure or means of the apparatus, particularly, blocks 470, 475, 571-575. The apparatus for video encoding may perform any of the embodiments of any of the methods 800 and 1600.

According to an aspect of the present disclosure, an apparatus for video decoding is provided including means for deriving one or more illumination compensation parameters based on neighboring samples of a sub-block of a block and neighboring samples of a motion-compensated reference sub-block; means for deriving a prediction sub-block by applying on the motion-compensated reference sub-block an illumination compensation using the one or more derived illumination compensation parameters; and means for encoding the sub-block using the prediction sub-block. The video decoders of **Figures 6, 7** may include the structure or means of the apparatus, particularly, blocks 670, 571-574. The apparatus for video decoding may perform any of the embodiments of any of the methods 800 and 1700.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Moreover, any of the methods 800, 1600 and/or 1700 may be implemented as a computer program product (independently or jointly) comprising computer executable instructions which may be executed by a processor. The computer program product having the computer-executable instructions may be stored in the respective transitory or non-transitory computer-readable storage media of the system 1800, encoder 400 (or 500) and/or decoder 600 (or 700).

It is important to note that one or more of the elements in the processes 800, 1600 and/or 1700 may be combined, performed in a different order, or excluded in some embodiments while still implementing the aspects of the present disclosure. Other steps may be performed in parallel, where the processor does not wait for a full completion of a step before starting another.

Furthermore, aspects of the present embodiments can take the form of a computer-readable storage medium. Any combination of one or more computer-readable storage medium(s) may be utilized. A computer-readable storage medium can take the form of a computer-readable program product embodied in one or more computer-readable medium(s) and having computer-readable program code embodied thereon that is executable by a computer. A computer-readable storage medium as used herein is considered a non-transitory storage medium given the inherent capability to store the information therein as well as the inherent capability to provide retrieval of the information therefrom. A computer-readable storage medium may be, for example, but is not limited to, an electronic, magnetic, optical, electromagnetic, infrared, or semiconductor system, apparatus, or device, or any suitable combination of the foregoing.

It is to be appreciated that the following list, while providing more specific examples of computer-readable storage mediums to which the present disclosure may be applied, is merely an illustrative and not exhaustive listing as is readily appreciated by one of ordinary skill in the art. The list of examples includes a portable computer diskette, a hard disk, a ROM, EPROM, Flash memory, a portable compact disc read-only memory (CD-ROM), an optical storage device, a magnetic storage device, or any suitable combination of the foregoing.

According to an aspect of the present embodiments, a computer-readable storage medium carrying a software program is provided including program code instructions for performing any of the embodiments of any of the methods of the present embodiments, including methods 800, 1600 and/or 1700.

It is to be understood that reference to "one embodiment" or "an embodiment" or "one implementation" or "an implementation" of the present disclosure, as well as other variations thereof, mean that a particular feature, structure, characteristic, and so forth described in connection with the embodiment is included in at least one embodiment of the present disclosure. Thus, the appearances of the phrase "in one embodiment" or "in an embodiment" or "in one implementation" or "in an implementation", as well any other variations, appearing in various places throughout the specification are not necessarily all referring to the same embodiment.

Additionally, the present disclosure or its claims may refer to "determining" various pieces of information. Determining, deriving, the information may include one or more of, for example, estimating the information, calculating the information, predicting the information, or retrieving the information from memory.

Also, the application or its claims may refer to "providing" various pieces of information. Providing the information may include one or more of, for example, outputting the information, storing the information, transmitting the information, sending the information, displaying the information, showing the information, or moving the information.

Moreover, the application or its claims or its claims may refer to "accessing" various pieces of information. Accessing the information may include one or more of, for example, receiving the information, retrieving the information (for example, from memory), storing the information, processing the information, moving the information, copying the information, erasing the information, calculating the information, determining the information, predicting the information, or estimating the information.

Further, the application or its claims or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the various features shown and described are interchangeable. Unless otherwise indicated, a feature shown in one embodiment may be incorporated into another embodiment. Further, the features described in the various embodiments may be combined or separated unless otherwise indicated as inseparable or not combinable.

As noted before, the functions of the various elements shown in the figures may be provided through the use of dedicated hardware as well as hardware capable of executing software in association with appropriate software. Also, when provided by a processor, the functions may be provided by a single dedicated processor, by a single shared processor, or by a plurality of individual processors, some of which may be shared.

It is to be further understood that, because some of the constituent system components and methods depicted in the accompanying drawings are preferably implemented in software, the actual connections between the system components or the process function blocks may differ depending upon the manner in which the processes of present disclosure are programmed. Given the teachings herein, one of ordinary skill in the pertinent art will be able to contemplate these and similar implementations or configurations of the present disclosure.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope of the present disclosure. In addition, individual embodiments can be combined, without departing from the scope of the present disclosure. All such changes and modifications are intended to be included within the scope of the present disclosure as set forth in the appended claims.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1.  A method for encoding a block of a video comprising:

    deriving one or more illumination compensation parameters based on neighboring samples of a sub-block of the block and neighboring samples of a motion-compensated reference sub-block;
    deriving a prediction sub-block by applying on the motion-compensated reference sub-block an illumination compensation using the one or more derived illumination compensation parameters; and
    encoding the sub-block using the prediction sub-block.

2.  A method for decoding a block of a video comprising:

    deriving one or more illumination compensation parameters based on neighboring samples of a sub-block of the block and neighboring samples of a motion-compensated reference sub-block;
    deriving a prediction sub-block by applying on the motion-compensated reference sub-block an illumination compensation using the one or more derived illumination compensation parameters; and
    decoding the sub-block using the prediction sub-block.

3.  An apparatus for encoding a block of a video comprising means for:

    deriving one or more illumination compensation parameters based on neighboring samples of a sub-block of the block and neighboring samples of a motion-compensated reference sub-block;
    deriving a prediction sub-block by applying on the motion-compensated reference sub-block an illumination compensation using the one or more derived illumination compensation parameters; and
    encoding the sub-block using the prediction sub-block.

4.  An apparatus for decoding a block of a video comprising means for:

    deriving one or more illumination compensation parameters based on neighboring samples of a sub-block of the block and neighboring samples of a motion-compensated reference sub-block;
    deriving a prediction sub-block by applying on the motion-compensated reference sub-block an illumination compensation using the one or more derived illumination compensation parameters; and
    decoding the sub-block using the prediction sub-block.

5. The method of one of claims 1 or 2 or the apparatus of one of claims 3 or 4, wherein multiple sub-blocks of a same block being encoded using prediction sub-blocks, encoding or decoding the sub-blocks comprises applying one separate transform to each residual derived from a sub-block and the associated prediction sub-block.

6. The method of one of claims 1 or 2, 5 or the apparatus of one of claims 3-5, wherein the neighboring samples of the current sub-blocks are samples inside the block.

7. The method of one of claims 1 or 2 or the apparatus of one of claims 3 or 4, wherein encoding or decoding the sub-blocks comprises applying one single transform to a prediction residual derived from the prediction residuals derived from the sub-blocks and the prediction sub-blocks.

8. The method or apparatus of claim 7, wherein one or more neighboring sample of the current sub-blocks are samples outside the block.

9. The method or apparatus of claim 7 or 8, wherein the neighboring samples of the sub-blocks and prediction sub-blocks are formed with samples of at least one further prediction sub-block only.

10. The method of one of claims 1, 2, 5-9 or the apparatus of one of claims 3-9, wherein the neighboring samples of a sub-block and prediction sub-block are formed with samples outside the block and samples of at least one further prediction sub-block inside the block.

11. The method of one of claims 1, 2, 5-10 or the apparatus of one of claims 3-10, wherein one or more illumination compensation parameters are derived from neighboring samples inside a sub-set of sub-blocks of the block.

12. A non-transitory computer readable storage medium having stored thereon instructions for encoding or decoding blocks of a video according to the method of any one of claims 1,2 and 5-11.

13. A non-transitory computer readable medium containing picture data content generated according to the method or the apparatus of any of the preceding claims.

14. A computer program product comprising instructions for performing the method of any one of claims 1, 2 and 5-11 when executed by one of more processors.

**Fig. 1**

**Fig. 2**

**Fig. 3**

**400**

**Fig. 4**

<u>500</u>

prediction block

470

574 — IC application

573 — IC parameters derivation

572 — Motion-compensation

571 — Sub-partitionning

iterations

block

MV

475

480 — Reference picture Buffer

575 — RD cost computation

prediction block

574 — IC application

573 — IC parameters derivation

572 — Motion-compensation

571 — Sub-partitionning

**Fig. 5**

**600**

**Fig. 6**

700

adjusted prediction block

570

IC application — 574

IC parameters derivation — 573

480

Reference picture
Buffer

Motion-compensation — 572

Sub-partitionning — 571

MV

Fig. 7

800

```
┌─────────────────────────────────────────────────┐
│            sub-partitioning a block             │  ⌐ 810
└─────────────────────────────────────────────────┘
                        │
                        ▼
┌─────────────────────────────────────────────────┐
│  Obtain a motion-compensated reference sub-block │  ⌐ 820
│          for the current sub-block              │
└─────────────────────────────────────────────────┘
                        │
                        ▼
┌─────────────────────────────────────────────────┐
│ derive one or more IC parameters for the        │  ⌐ 830
│ sub-block and derive a prediction sub-block by  │
│ applying IC on the motion-compensated reference │
│ sub-block using the derived one or more IC      │
│ parameters                                      │
└─────────────────────────────────────────────────┘
                        │
                        ▼
┌─────────────────────────────────────────────────┐
│ encode/decode the sub-block using the           │  ⌐ 840
│ prediction sub-block.                           │
└─────────────────────────────────────────────────┘
```

iterations

# Fig. 8

horizontal

block

Sub-block

vertical

Sub-block

Fig. 9

1000

| Determine affine motion model |
|---|

| Derive motion vectors for sub-blocks |
|---|

## Fig. 10

## Fig. 11

**1200**

| Obtain neighboring samples of current sub-block | 1210 | Obtain motion-compensated neighboring samples for the current sub-block | 1220 |

| Compute IC parameters | 1230 |

| Adjust motion-compensated reference sub-block | 1240 |

Fig. 12

current picture block

Inside samples

outside samples

current sub-block

Fig. 13a

Inside samples

outside samples

current sub-block

current picture block

**Fig. 13b**

current picture block

Inside samples

current sub-block

**Fig. 13c**

current picture block

a

b

c

Inside samples

current sub-block

**Fig. 13d**

1400

1410

Calculate prediction residual

1420

Transforme, quantize and entropy code prediction residual

## Fig. 14

VPDU

## Fig. 15

<u>1600</u>

obtain a block

800

sub-partitioning a block — 810

Obtain a motion-compensated reference sub-block for the current sub-block — 820

derive one or more IC parameters for the sub-block and derive a prediction sub-block by applying IC on the motion-compensated reference sub-block using the derived one or more IC parameters — 830

iterations

encode the sub-block using the prediction sub-block. — 840

**Fig. 16**

<u>1700</u>

```
┌─────────────────────────────────────────────────┐
│              Decode information                  │
└─────────────────────────────────────────────────┘
                       │
                       ▼
┌─────────────────────────────────────────────────┐      810
│            sub-partitioning a block              │
└─────────────────────────────────────────────────┘
                       │
                       ▼
┌─────────────────────────────────────────────────┐      820
│  Obtain a motion-compensated reference sub-block │
│            for the current sub-block             │
└─────────────────────────────────────────────────┘
                       │
                       ▼
┌─────────────────────────────────────────────────┐      830
│  derive one or more IC parameters for the sub-   │
│  block and derive a prediction sub-block by      │
│  applying IC on the motion-compensated reference │
│  sub-block using the derived one or more IC      │
│  parameters                                      │
└─────────────────────────────────────────────────┘

iterations
                       │
                       ▼
┌─────────────────────────────────────────────────┐
│   decode the sub-block using the prediction      │
│   sub-block.                                     │
└─────────────────────────────────────────────────┘
```

**Fig. 17**

**Fig. 18**

EP 3 751 853 A1

## EUROPEAN SEARCH REPORT

**Application Number**

EP 19 30 5745

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/366415 A1 (LIU HONGBIN [US] ET AL) 15 December 2016 (2016-12-15) * abstract * * paragraph [0131] - paragraphs [0144], [0186] * * in particular paragraphs 135-137 * | 1-14 | INV. H04N19/46 H04N19/463 H04N19/51 |
| X | US 2008/304760 A1 (LEE YUN-GU [KR] ET AL) 11 December 2008 (2008-12-11) * abstract * * paragraph [0039] - paragraphs [0059], [0087]; figures 1-4 * * in particular paragraph 53 with figures 3B and 4 * | 1-14 | |
| A | US 2014/139627 A1 (CHEN YING [US] ET AL) 22 May 2014 (2014-05-22) * abstract * * paragraph [0057] * | 1-14 | |
| A | ABE K ET AL: "CE10-related: LIC restriction for pipeline structure", 125. MPEG MEETING; 20190114 - 20190118; MARRAKECH; (MOTION PICTURE EXPERT GROUP OR ISO/IEC JTC1/SC29/WG11), , no. m45345 13 January 2019 (2019-01-13), XP030213028, Retrieved from the Internet: URL:http://phenix.int-evry.fr/mpeg/doc_end _user/documents/125_Marrakech/wg11/m45345- JVET-M0088-v4-JVET-M0088-v4.zip JVET-M0088-v4/JVET-M0088-v3.doc [retrieved on 2019-01-13] * abstract * * sections 1-3 with figures 2-4 * | 1-14 | **TECHNICAL FIELDS SEARCHED (IPC)** H04N |

The present search report has been drawn up for all claims

| Place of search | Date of completion of the search | Examiner |
|---|---|---|
| Berlin | 14 January 2020 | Heising, Guido |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 30 5745

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2020

| Patent document cited in search report | | Publication date | Patent family member(s) | | Publication date |
|---|---|---|---|---|---|
| US 2016366415 | A1 | 15-12-2016 | AU | 2016274480 A1 | 30-11-2017 |
| | | | CN | 107710764 A | 16-02-2018 |
| | | | EP | 3308544 A1 | 18-04-2018 |
| | | | JP | 2018522466 A | 09-08-2018 |
| | | | KR | 20180016389 A | 14-02-2018 |
| | | | TW | 201711463 A | 16-03-2017 |
| | | | US | 2016366415 A1 | 15-12-2016 |
| | | | WO | 2016200777 A1 | 15-12-2016 |
| US 2008304760 | A1 | 11-12-2008 | CN | 101325715 A | 17-12-2008 |
| | | | JP | 5133136 B2 | 30-01-2013 |
| | | | JP | 2008306720 A | 18-12-2008 |
| | | | KR | 20080108774 A | 16-12-2008 |
| | | | US | 2008304760 A1 | 11-12-2008 |
| US 2014139627 | A1 | 22-05-2014 | CN | 104813668 A | 29-07-2015 |
| | | | EP | 2923492 A1 | 30-09-2015 |
| | | | ES | 2620432 T3 | 28-06-2017 |
| | | | HU | E032219 T2 | 28-09-2017 |
| | | | JP | 6359549 B2 | 18-07-2018 |
| | | | JP | 2016501484 A | 18-01-2016 |
| | | | JP | 2018110409 A | 12-07-2018 |
| | | | TW | 201436539 A | 16-09-2014 |
| | | | US | 2014139627 A1 | 22-05-2014 |
| | | | WO | 2014081799 A1 | 30-05-2014 |

EPO FORM P0459

For more details about this annex : see Official Journal of the European Patent Office, No. 12/82